# EUROPEAN PATENT APPLICATION

(11) **EP 1 128 007 A2**
(43) Date of publication of application: **29.08.2001**
(21) Application number: 01104065.6
(22) Date of filing: 20.02.2001
(51) Int. Cl.: E05B 49/00

(54) **Control apparatus and control method**

(30) Priority: 21.02.2000 JP 2000042128
(71) Applicant: Omron Corporation, Kyoto-shi, Kyoto-fu, 600-8530 (JP)
(72) Inventor: Hara, Kentaro, c/o OMRON Corporation, Shiokouji-dori, Shimogyo, Kyoto 600-8530 (JP); Yamashita, Shuji, c/o OMRON Corporation, Shiokouji-dori, Shimogyo, Kyoto 600-8530 (JP)
(74) Representative: Kilian, Helmut, Dr.

(57) **Abstract**

After execution of power transmission as a start signal, a main unit machine 20, which determines that a portable machine 10 is started, transmits a request signal containing an authentication code at a frequency different from the power transmission. The portable machine 10 returns an answer signal containing an authentication code as a response to the request signal. Upon reception of the answer signal, the main unit machine 20 checks the authentication code for validity before executing some control.

## Description

### BACKGROUND OF THE INVENTION

### 1. Field of the Invention

This invention relates to a control apparatus anda control method for accomplishing the operation involving checking an authentication code for validity (so-called ID authentication), such as the vehicle door unlock operation, without requiring cumbersome operation of the operator in a system requiring crime prevention and convenience such as a vehicle entry system.

### 2. Description of the Related Art

As a system containing this kind of control apparatus, for example, a keyless entry system of a vehicle coming into widespread use in recent years has been available. This keyless entry system comprises a portable machine that can be carried by the user and a main unit machine (in this case, vehicle-installed machine) installed in a controlled object (in this case, vehicle). In the keyless entry system, authentication code is checked for validity by radio communications between them and predetermined operation (unlocking or locking operation) of the controlled object (in this case, vehicle door lock) is accomplished under the control of the main unit machine provided that the authentication code is valid.

An early-type and general system of such a system has a configuration wherein the user operates a specific button, etc., placed on a portable machine, thereby radio-transmitting a specific operation signal containing an authentication code (for example, vehicle door unlocking command) from the portable machine, and a main unit machine receives the signal and checks that the authentication code contained in the received signal corresponds to the authentication code preset in the main unit machine, then performs predetermined output for controlling a predetermined controlled object (for example, control signal output for unlocking vehicle doors). Namely, the system provides a one-way communication system of conducting only one-way communications from the portable machine (in this case, transmitter) to the main unit machine (in this case, receiver). The number of the operation means such as the button of the portable machine described above may be only one or more than one means may be provided for enabling different types of operation, such as unlocking a trunk and starting an engine in addition to locking vehicle doors.

However, in such a one-way communication system, the portable machine needs to be driven only with an installed battery, and it is impossible to output a signal containing the authentication code all the time because of consumption of the battery. Thus, as described above, a signal must always be transmitted with some operation of the user as a trigger (namely, it always becomes necessary for the user to perform some intentional operation); the system involves a limit to enhance the convenience of the user.

Then, in recent years, a more advanced system for conducting two-way communications has been proposed and partially has been put to use. The system contains electric power transmission between a portable machine and a main unit machine and executs necessary check for validity while suppressing consumption of the power of the portable machine and then operats a controlled object.

For example, as a keyless entry system of a vehicle, a two-way communication system comes along wherein a portable machine entering a communication-possible range receives electric power transmission in non-contact from a main unit machine and is started with the electric power transmission as a start signal. Then the portable machine transmits a signal containing an authentication code to the main unit machine while electric power required after the portable machine is started is also provided by the electric power transmission in some cases.

The two-way communication system makes it possible to automatically transmit the signal containing the authentication code to the main unit machine with the start caused by the power transmission as a trigger, so that predetermined operation of the controlled target can be accomplished without performing any operation of the user in some cases. For example, with an entry system of a vehicle, if the user carrying a portable machine simply approaches a door of a specific vehicle installing a main unit machine corresponding to the portable machine, the above-mentioned two-way communications can be established and an unlocking command can be automatically output to the lock of the locked door for automatically unlocking the vehicle doors. The more convenient entry system for enabling the vehicle doors to be unlocked or locked basically without requiring intentional operation of the user is called a smart entry system (or a hand-free entry system), etc., as a development model of a general keyless entry system. The market needs for such a smart entry system, etc., grow as an entry system enhancing the commodity product value of the vehicle installing the entry system.

However, the two-way communication-type apparatus as described above has also conducted radio communications of any signal other than the start signal between the portable machine and the main unit machine (transmission and reception of a signal containing an authentication code) at the same frequency as the above-described power transmission.

Further, communications have been conducted in the communication system wherein a signal containing an authentication code is only returned reflectively from the portable machine in response to power transmission sent as a start signal of the portable machine from the main unit machine as described above (namely, the signals are shuttled only once) .

'Thus, the two-way communication-type apparatus as described above involve the following problems:
(1) A signal of an authentication code may need to be contained in the electromagnetic wave of power transmission from the main unit machine. In this case, it is feared that the electromagnetic wave of power transmission may be received and read near the main unit machine, thereby decoding the authentication code if the portable machine is not available. Thus, it becomes difficult to secure enhanced crime prevention of authentication code theft. For example, a vehicle entry system has a sufficient possibility in which it will be used in a situation in which a plurality of other vehicles each installing the same model of entry system exist nearby. Thus, authentication code needs also to be checked for validity in the portable machine to discriminate the vehicle corresponding to the portable machine from other vehicles so that whenever the portablemachine is started in response to power transmission from the main unit machine of a different vehicle from the vehicle corresponding to the portable machine in such a situation, the portable machine does not transmit a signal containing the authentication code. To do this, in the communication system in which the signals containing power transmission are shuttled only once, the authentication code signal always needs to be contained in the electromagnetic wave of power transmission from the main unit machine. Then, it is feared that the electromagnetic wave of the power transmission may be received and read near the vehicle, thereby decoding the authentication code if the portable machine is not available. Particularly, in the configuration wherein the above-described power transmission is executed from the main unit machine all the time, the risk of authentication code theft is raised.
(2) It is hard to widen the communication range while suppressing power consumption of a transmitter at such a comparatively low frequency for enabling electric power to be transmitted in a non-contact manner (for example, 10 to 200 kHz). Thus, if an attempt is made to also communicate a signal containing an authentication code with high reliability while providing a sufficient communication range, it becomes difficult to sufficiently decrease power consumption of the main unit machine and the portable machine driven with a battery after being started.
(3) A large amount of data to be communicated cannot be provided at such a comparatively low frequency for enabling electric power to be transmitted in a non-contact manner. Thus, for example, the following is impossible: Various operation commands of the user are accepted and are contained in signals transmitted from the portable machine for providing a wide variety of control functions, such as unlocking a trunk and starting an engine in addition to locking vehicle doors.

### SUMMARY OF THE INVENTION

It is therefore an object of the invention to provide a two-way communication-type control apparatus and a control method for making it possible to solve problems as described above, less consume power, more improve crime prevention, and more enhance the convenience of the user.

According to the invention, there is provided a control apparatus comprising a portable machine that can be carried by the user and a main unit machine being installed in, added to, or connected to an object containing a controlled object for conducting radio communications with the portable machine for checking that the portable machine is a predetermined portable machine before executing control processing to accomplish predetermined operation of the controlled object. The portable machine comprises:
power reception means for receiving electric power by power transmission in a non-contact manner using an electromagnetic wave, portable machine communication means for radio-communicating a signal at a communication frequency different from a frequency of the power transmission, and portable machine storage means for storing an authentication code. In the portable machine, the portable machine is started from a sleep mode upon reception of predetermined electric power by the power reception means, and radio-transmits an answer signal containing the authentication code previously registered in the portable machine storage means by the portable machine communication means provided that a request signal radio-transmitted from the main unit machine is received by the portable machine communication means during the starting.

The main unit machine comprises:
power sending means for sending electric power by the power transmission, main unit machine communication means for radio-communicating a signal at the communication frequency, and main unit machine storage means for storing an authentication code. In the main unit machine, after sending the predetermined electric power by the power sending means, the main unit machine radio-transmits the request signal by the main unit machine communication means and upon reception of the answer signal by the main unit machine communication means after transmitting the request signal, the main unit machine determines whether or not the authentication code contained in the answer signal corresponds to the authentication code previously registered in the main unit machine storage means, and if the determination result is affirmative, the main unit machine determines that the authentication code contained in the answer signal is valid.

According to the invention, power transmission performed by the main unit machine to the portable machine is used only as the start signal of the portable machine (further power supply to the portable machine depending in some cases) and then the request signal and the answer signal for checking the authentication code for validity are transferred at the communication frequency different from the frequency of the power transmission.

Thus, even when the authentication code needs to be first transmitted from the main unit machine to the portable machine, if the authentication code is contained in the request signal for transmission, at least it need not be placed in the power consumption functioning as the start signal. Therefore, even if the power transmission is periodically executed all the time, theft of reading the authentication code from the power transmission becomes impossible and crime prevention is enhanced.

It is made possible to transmit and receive normal signals for checking the authentication code for validity, etc., at frequency fitted to the normal signals (communication frequency) by the signals containing the request signal and the answer signal and it becomes unnecessary to transmit and receive the normal signals at the power transmission frequency much consuming power, so that power consumption can be decreased accordingly. Particularly, to use the power transmission only as the start signal, the power consumption decrease effect can be enhanced (particularly, power consumption of the main unit machine can be decreased exceptionally).

If it is made possible to transmit and receive the normal signals for checking the authentication code for validity, etc., at the normal communication frequency, the contents of the transferred signals can be increased for providing more various control and the authentication code can be easily complicated, whereby crime prevention is further enhanced.

The term "electromagnetic waves" mentioned here also include infrared rays, etc., in addition to at least radio waves in the narrow sense. The expression "object containing controlled object" may be the controlled object itself, of course, and specifically can be a vehicle, amachine, adevice, abuilding, a facility, etc., for example. The term "predetermined electric power" may function only as the start signal of the portable machine or may provide a part or all of power consumed by the portable machine. To save power consumption, preferably the portable machine is automatically restored to the sleep mode after the answer signal is transmitted (immediately after the answer signal is transmitted or after the expiration of a predetermined time interval). For example, the portable machine existing in a distance range in which it cannot communicate with the main unit machine may be detected and the portable machine may be automatically restored to the sleep mode after the detection timing.

To avoid fruitless transmission, preferably the main unit machine determines that the portable machine is started before transmitting the request signal. In this case, when a predetermined time interval has elapsed after the predetermined electric power was transmitted, it may be estimated that the portable machine is started. After the portable machine is started, it may further radio-transmit a start notification signal for notifying that the portable machine is started, and
upon reception of the start notification signal, the main unit machine may determine that the portable machine is started. In doing so, a check is made to ensure that the portable machine is started before the request signal is transmitted (the request signal is not transmitted unless the portable machine is started in the communication range), so that fruitless transmission can be avoided surely, contributing to more saving power consumption of the main unit machine. In this case, the request signal is not transmitted unless the portable machine is in the communication range. Thus, if the authentication code is placed in the request signal, it becomes extremely difficult to illegally read the authentication code with the signal from the main unit machine, and advanced crime prevention can be realized.

The functions of the portable machine and the main unit machine as described above are provided by control circuits containing microcomputers, for example.

In a preferred form of the invention, the control apparatus further comprises detection means for detecting a relative move of the portable machine or a user of the portable machine to the main unit machine or the object containing approach and backing or the action of the user or the object in relation to the predetermined operation of the controlled obj ect, wherein the main unit machine sends the predetermined electric power based on the detection result of the detection means.

Such a configuration makes it possible to send the predetermined electric power (namely, transmit electric power from the main unit machine to the portable machine) with the detection result of the detection means as a trigger, and it becomes unnecessary to send the predetermined power, for example, periodically all the time, so that it is made possible to markedly decrease power consumption.

The detection means may be a sensor for detecting the body of the user as described later, such as a magnetic or optical proximity sensor, or may be a sensor for detecting the open or closed state of a door of a vehicle as the object or the actuation state of a door knob.

In the control apparatus of the invention, the object maybe a vehicle, the controlled object may be a lock for locking or unlocking a door of the vehicle, and the control processing may be control signal output for accomplishing the locking or unlocking operation of the lock.

In this case, the most of the above-described advantages of the invention (enhancement of crime prevention, decrease in power consumption, providing various control contents) can be made in a vehicle locking and unlocking system (namely, so-called entry system).

In the control apparatus of the invention, the object may be a vehicle and the controlled object may be a lock for locking or unlocking a door of the vehicle, the detection means may contain a door knob sensor for detecting the body of the user (also containing clothes attached to the body or an object carried or held by the user) approaching a door knob of the vehicle or the vicinity of the door knob to handle the door knob, and when a detection signal is output from the door knob sensor in a lock state of the door, the main unit machine may send the predetermined electric power and if the authentication code is determined valid as a result of sending the predetermined electric power, the main unit machine may execute control signal output for accomplishing the unlocking operation of the lock as the control processing.

In such a configuration, if the user carrying a predetermined portable machine touches the door knob, for example, attempting to ride in the vehicle, when it is detected by the door knob sensor, the predetermined electric power is sent and at least the request signal and the answer signal are transferred between the main unit machine and the portable machine carried by the user, the main machine unit executes the control signal output, and the unlocking operation of the lock of the vehicle is executed automatically. That is, the user can ride in the vehicle with the locked doors simply by the natural action of touching the door knob, for example, (normal action of opening the unlocked door) without performing any intentional operation for unlocking. Thus, the ride operation of the so-called smart entry system can be realized in addition to the advantages of the invention as described above.

In the control apparatus of the invention, the object may be a vehicle and the controlled object may be a lock for locking or unlocking a door of the vehicle, the detection means may contain a door knob sensor for detecting the body of the user approaching a door knob of the vehicle or the vicinity of the door knob to handle the door knob and a door open/closed sensor for detecting an open or closed state of the door of the vehicle, and when the door being closed in an unlock state is sensed based on detection output of the door open/closed sensor and change is made from a state in which a detection signal is output from the door knob sensor to a state in which the detection signal stops, the main unit machine may send the predetermined electric power and if the authentication code is determined valid as a result of sending the predetermined electric power, the main unit machine may execute control signal output for accomplishing the locking operation of the lock as the control processing.

In such a configuration, if the user carrying a predetermined portable machine gets off the vehicle and closes the door while holding the door knob, for example, and moves his or her hand off the door knob, when it is detected by the door knob sensor, the predetermined electric power is sent-and at least the request signal and the answer signal are transferred between the main unit machine and the portable machine carried by the user, the main machine unit executes the control signal output, and the locking operation of the lock of the vehicle is executed automatically. That is, the user can get off the vehicle and lock the doors simplyby the natural action of closing the door while holding the door knob, for example, (normal action of closing the door) without performing any intentional operation for locking. Thus, the exit operation of the so-called smart entry system can be realized in addition to the advantages of the invention as described above.

In the configuration, when the door being closed in an unlock state is sensed based on detection output of the door open/closed sensor and change is made from a state in which a detection signal is output from the door knob sensor to a state in which the detection signal stops, the main unit machine sends the predetermined electric power. As an alternative, the following form may be adopted:

When handling the door from an open state to a closed state with a detection signal remaining output from the door knob sensor in an unlock state of the door is sensed based on detection output of the door open/closed sensor, the main unit machine sends the predetermined electric power.

In this case, when the user carrying a predetermined portable machine gets off the vehicle and closes the door while holding the door knob, for example, the predetermined electric power is sent and at least the request signal and the answer signal are transferred between the main unit machine and the portable machine carried by the user, and the locking operation of the lock of the vehicle is executed automatically.

In the configuration, the door knob sensor and the door open/closed sensor are provided as the detection means. However, a door knob actuation sensor for detecting actuation of the door knob of the vehicle is used in place of the door knob sensor.

In this case, when the user carrying a predetermined portable machine gets off the vehicle and closes the door with the door knob held and pulled (with the door knob actuated), for example, the predetermined electric power is sent and at least the request signal and the answer signal are transferred between the main unit machine and the portable machine carried by the user, and the locking operation of the lock of the vehicle is executed automatically.

As a preferred form of the invention, the control apparatus may further comprise exit detection means for detecting the portable machine or a passenger exiting from the vehicle, wherein the main unit machine may execute control signal output for accomplishing the locking operation of the lock only if the exit detection means checks that the portable machine or the passenger exits from the vehicle.

Such a configuration provides the advantage of preventing the portable machine or the passenger from being locked into the vehicle. Means made up of an antenna disposed so that communications are established only when the portable machine exists in the vehicle and processing means for determining whether or not communications through the antenna are established can be used as the exit detection means. The detection means made up of the door knob sensor (or door knob actuation sensor) and the door open/closed sensor can also be used as a kind of the exit detection means, because it can be estimated that the passenger, etc., exits from the vehicle from the action of closing the door while holding the door knob. The exit detection means may be a sensor for directly detecting the presence of the passenger in the vehicle, such as a sensor consisting of a camera and an image recognition unit.

As another preferred form of the invention, the object may be a vehicle, the controlled object may be an object installed in the vehicle, and the control processing may be signal output or data setting operation for enabling the operation of the vehicle-installed object, or signal output for giving an instruction to operate the vehicle-installed object.

In this case, a control system of the object installed in the vehicle having an authentication check function by radio communications is provided and in such a system, the most of the above-described advantages of the invention (enhancement of crime prevention, decrease in power consumption, providing various control contents) can be made.

The object installed in the vehicle can be a drive source of an engine, a motor, etc., a drive mechanism of a transmission, etc., an air conditioner, an audio set, a navigation system, illumination, etc., for example. If the invention is incorporated and it becomes necessary to check authentication, the drive source and the drive mechanism, for example, cannot easily be operated by an outsider (for example, the engine cannot easily be operated by an outsider). Thus, the function is useful particularly for preventing the vehicle from being stolen.

The expression "data setting operation for enabling the operation of the object installed in the vehicle" means internal processing of setting a flag for enabling the operation of the object installed in the vehicle in information processing of the main unit machine, for example.

To apply the invention to control of the object installed in the vehicle as described above, a drive operation sensor for detecting the body of the user approaching a drive operation section (steering wheel, shift knob, side brake lever, etc.,) of the vehicle or the vicinity of the drive operation section to drive the vehicle may be provided as the detection means, and when a detection signal is output from the drive operation section, the main unit machine may send the predetermined electric power and if the authentication code is determined valid as a result of sending the predetermined electric power, the main unit machine may execute signal output or data setting operation for enabling the operation of the vehicle-installed object, or signal output for giving an instruction to operate the vehicle-installed object as the control processing.

In such a configuration, if the user carrying a predetermined portable machine sits in the driver's seat of the vehicle and touches the steering wheel, for example, of the drive operation section, when it is detected by the drive operation sensor, the predetermined electric power is sent and at least the request signal and the answer signal are transferred between the main unit machine and the portable machine carried by the user, the main machine unit executes the control signal output and performs signal output or data setting operation for enabling starting the engine, for example, of the vehicle or signal output for giving an instruction to operate the navigation system, whereby the navigation system is automatically started. That is, the user can operate the object installed in the vehicle or set operation enable simply by the natural action of sitting in the driver's seat and touching the steering wheel, for example, (normal drive preparation action) without performing any intentional operation for operating the vehicle-installed object (or enabling operation) . Thus, convenience as in the smart entry system can be provided for operation of the vehicle-installed object in addition to the advantages of the invention as described above.

An operation sensor for detecting the body of the user approaching an operation section (key cylinder, pushbutton, etc.,) of the vehicle-installed object or the vicinity of the operation section to operate the vehicle-installed object may be provided in place of or together with the drive operation sensor.

### BRIEF DESCRIPTION OF THE DRAWINGS

FIGs. 1A and 1B are respectively drawings to show the configuration of a control apparatus;
FIG. 1C is a schematic of the control apparatus as shown in FIGs. 1A and 1B;
FIGs. 2A and 2B are respectively drawings to show a door knob sensor;
FIGs. 3A and 3B are respectively drawings to show a door knob actuation sensor, etc.;
FIGs. 4A and 4B are respectively drawings to show a use example of the control apparatus;
FIGs. 5A and 5B are respectively drawings to describe one example of an automatic locking function of the control apparatus;

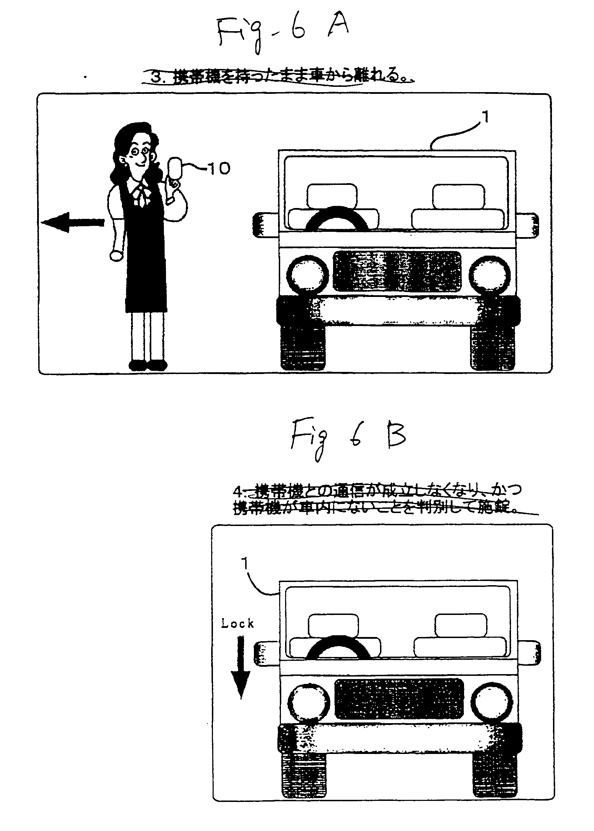

FIGs. 6A and 6B are respectively drawings continued from FIGs. 5A and 5B;
FIG. 7 is a drawing to show of a placement example of detection means in a driver's seat;
FIG. 8 is a flowchart to show control processing of a main unit machine;
FIG. 9 is a flowchart to show control processing of a portable machine;
FIG. 10 is a flowchart to show control processing of a main unit machine in a second embodiment of the invention; and
FIG. 11 is a flowchart to show control processing of a portable machine in the second embodiment of the invention.

### DETAILED DESCRIPTION OF THE PREFERRED EMBODIMENT

Referring now to the accompanying drawings, there are shown preferred embodiments of the invention.

### (First embodiment)

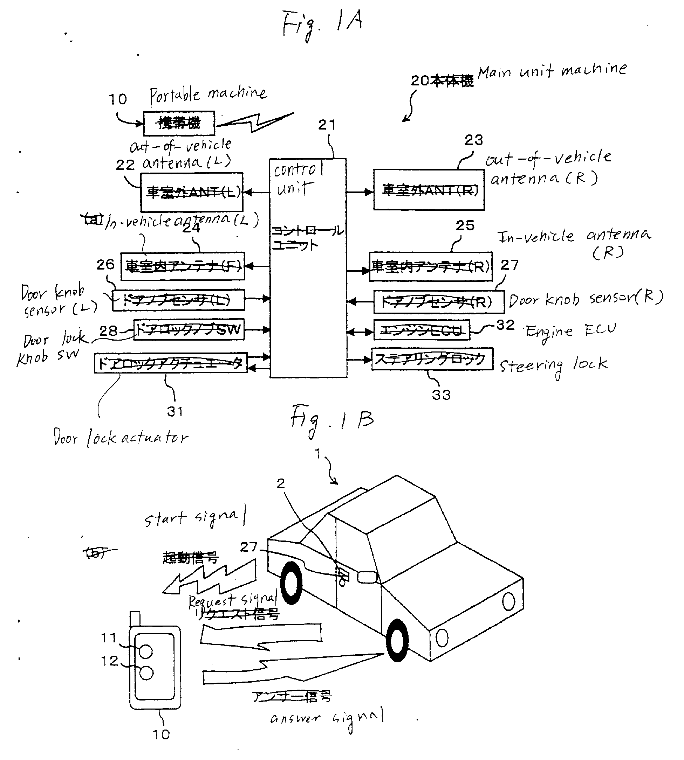

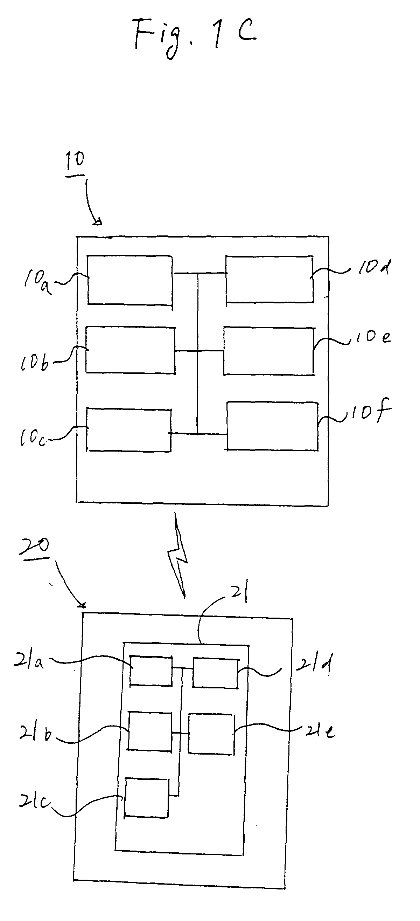

First, a first embodiment of the invention will be discussed. The embodiment is an example of applying the invention to a control apparatus of an entry system and an engine start system of a vehicle 1 of two-door type, for example, as shown in FIG. 1B.

The control apparatus comprises a portable machine 10 and a main unit machine 20 (containing antennas and sensors as peripheral devices) installed in the vehicle 1, as shown in FIG. 1A.

The portable machine 10 contains power reception means 10a, portable machine communication means 10b, portable machine storage means 10c, a control circuit 10d, an internal battery 10e, a power supply circuit 10f, and the like as shown in FIG. 1C. The power reception means receives electric power by non-contact power transmission of an electromagnetic wave. The portable machine communication means radio-communicates a signal at a communication frequency, such as a frequency in a UHF band, different from the frequency of the power transmission. The portable machine storage means stores at least an authentication code, also called ID code, key code, or the like. The control circuit contains a microcomputer for controlling the whole portable machine and performing necessary information processing. The power supply circuit supplies power of the internal battery and the power received by the power reception means to power consuming components, such as the portable machine communication means and the control circuit. A locking switch 11 and an unlocking switch 12 shown in FIG. 1B of a push-button operation section are provided on the operation surface of the portable machine 10.

In FIG. 1A, numeral 31 denotes a door lock actuator of a drive source of a door lock of the vehicle 1, numeral 32 denotes a control unit of an engine control system of the vehicle 1, and numeral 33 denotes a steering lock of the vehicle 1.

The detailed configurations of the power reception means, the portable machine communication means, etc., are not limited in the invention and will not be discussed because at least various known configurations can be adopted. The main components are outlined. For example, the power reception means is made up of a coil antenna, a rectification circuit for generating DC power from an induced electromotive force produced on the coil antenna, and the like. For example, the portable machine communication means comprises the antenna common to the power reception means or a separate antenna, a circuit for radio-communicating at a predetermined communication frequency through the antenna (modulation circuit, demodulation circuit, originating circuit, etc.,), and the like. The control circuit comprises a CPU, ROM, RAM, and an input/output circuit. The portable machine storage means has erasable non-volatile memory storing an authentication code, such as EEPROM.

The power supply circuit has a circuit for performing necessary voltage conversion, voltage stabilization processing, etc. In this case, the power supply circuit comprises power supply control means made up of switching elements, electromagnetic relays, semiconductor relays, etc., for turning on and off power supply of the whole portable machine 10 (or main power supply) . If the power supply control means turns off the power supply of the whole portable machine 10 according to a control command (sleep command) of the control circuit, a so-called sleep mode is entered in which the whole operation of the portable machine 10 is stopped and power consumption becomes zero or almost zero. If the power reception means receives predetermined electric power as a start signal in the sleep mode, the power supply control means is driven, power supply of the whole portable machine 10 (or main power supply) is turned on, and the portable machine 10 is started and remains started until another sleep command is output.

The control circuit has a function of executing the following processing operation according to operation program setting, etc., of the microcomputer:

As shown in FIG. 1B, the control circuit has a function of radio-transmitting an answer signal containing the authentication code previously registered in the portable machine storage means by the portable machine communication means provided that the portable machine communication means receives a request signal radio-transmitted from the main unit machine 20 during the starting, as described later in detail.

The control circuit also has a function of radio-transmitting a locking command signal containing the authentication code or an unlocking command signal containing the authentication code if the locking switch 11 or the unlocking switch is operated. When the locking command signal or the unlocking command signal is transmitted and is received at the main unit machine 20, the authentication code is checked for validity by the control function of the main unit machine 20 before the doors of the vehicle 1 are locked or unlocked. That is, the control apparatus of the embodiment made up of the portable machine 10 and the main unit machine 20 is configured also to provide the same function as the control apparatus of a general keyless entry system (above-described one-way communication system).

On the other hand, the main unit machine 20 comprises a control unit 21, out-of-vehicle antennas 22 and 23, in-vehicle antennas 24 and 25, and sensors of door knob sensors 26 and 27, a door lock knob switch 28, etc., as shown in FIG. 1A.

The out-of-vehicle antennas 22 and 23 are coil antennas placed at the left and right of the outside of the vehicle 1 (for example, in door mirrors). The in-vehicle antennas 24 and 25 are coil antennas placed at the front and the rear near the center in the vehicle 1.

The antennas may be shared as antennas for transmitting a start signal (transmitting electric power) and transmitting and receiving other signals (radio communications at the communication frequency); however, for example, separate antennas for transmitting and receiving usual signals (radio communications at the communication frequency) may be provided. In this case, the separate antennas may be disposed at the same positions as the antennas 22 to 25 or may be placed at other positions (for example, in the control unit 21).

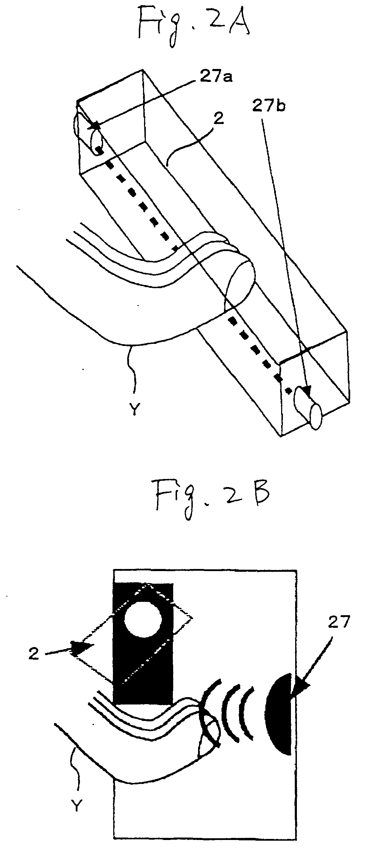

The door knob sensors 26 and 27 are proximity sensors each for detecting the body of the user (for example, a finger Y) being in contact with a door knob 2 of the vehicle 1 or the body of the user approaching the door knob 2 to handle the door knob 2. Specifically, as shown in FIG. 2A, the door knob sensor 27 may be an optical sensor comprising a light emission part 27a and a light reception part 27b, wherein a light beam transmitted and received therebetween is blocked, whereby output is changed. Alternatively, the door knob sensor 27 may be an optical sensor for detecting the body of the user based on the reception state of a reflected wave, as shown in FIG. 2B.

The door lock knob switch 28 is a proximity sensor for detecting the body of the user (for example, finger Y) being in contact with a door lock knob in the vehicle (not shown) or the body of the user approaching the door lock knob.

The door knob sensors 26 and 27 and the door lock knob switch 28 are sensors (detection means of the invention) each for forming a trigger (condition for startingpower transmission as a start signal) for controlling the door locking or unlocking operation, as described later.

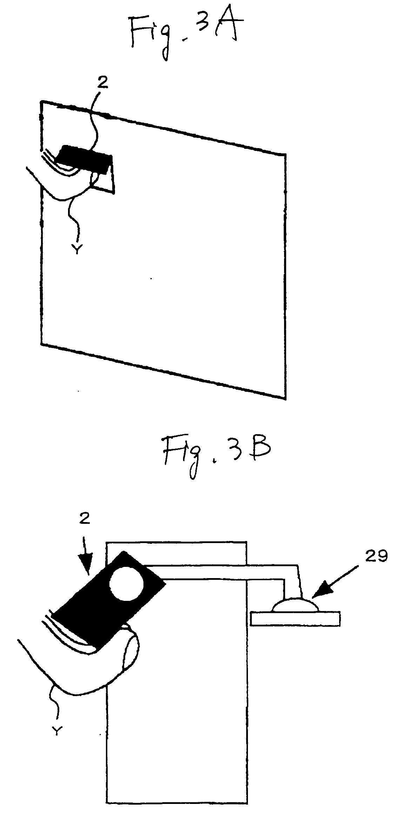

A door knob actuation sensor 29 as shown in FIG. 3B may be provided in place of the door knob sensors 26 and 27. The door knob actuation sensor 29 is any sensor for outputting a detection signal if the door knob 2 is pulled.

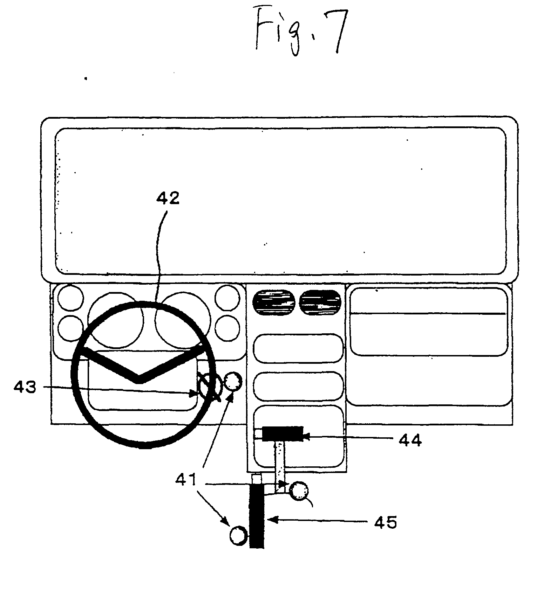

In the embodiment, the main unit machine 20 is provided with a sensor for forming a trigger to control engine starting although the sensor is not shown in FIG. 1. That is, as shown in FIG. 7, a proximity sensor 41 is disposed at places (three places in FIG. 7) where operation tools for performing drive operation in the driver's seat (containing engine start operation) are placed. The proximity sensors correspond to the detection means of the invention (drive operation sensors or operation sensors) . In FIG. 7, numeral 42 denotes a steering wheel, numeral 43 denotes an engine start operation section, numeral 44 denotes a shift knob, and numeral 45 denotes a side brake lever. The engine start operation section 43 is a pushbutton switch or a knob switch, for example, (not a key cylinder in related art).

The control unit 21 comprises a control circuit 21a implemented as a microcomputer containing a CPU, ROM, and RAM, a power sending circuit 21b for sending electric power by power transmission, a main unit machine communication circuit 21c for radio-communicating a signal at the communication frequency, main unit machine storage means 21d for storing authentication code, a power supply circuit 21e, and the like as shown in FIG. 1C.

The detailed configurations of the power sending circuit, the main unit machine communication circuit, etc., are not limited in the invention and will not be discussed because at least various known configurations can be adopted. The main components are outlined. For example, the power sending circuit comprises an originating circuit for transmitting electric power through the out-of-vehicle antennas 22 and 23 and the in-vehicle antennas 24 and 25 and the like. For example, the main unit machine communication circuit comprises a circuit for radio-communicating at predetermined communication frequency (modulation circuit, demodulation circuit, originating circuit, etc.,) through the out-of-vehicle antennas 22 and 23 and the in-vehicle antennas 24 and 25 (or separate antennas described above). The control circuit comprises a CPU, ROM, RAM, and an input/output circuit. The main unit machine storage means has erasable non-volatile memory storing an authentication code, such as EEPROM.

The power supply circuit has a circuit for performing necessary voltage conversion, voltage stabilization processing, etc., with the battery installed in the vehicle 1 as an input power supply, and basically always supplies power to the power consuming components of the main unit machine 20.

The control circuit has the following processing operation execution function according to operation program setting, etc., of the microcomputer:

When any of the above-described triggers is formed, as shown in FIG. 1B, predetermined electric power as a start signal is sent by the power sending circuit, then a request signal containing an authentication code is radio-transmitted by the main unit machine communication circuit. When an answer signal from the portable machine 10 is received by the main unit machine communication circuit after the request signal is transmitted, whether or not the authentication code contained in the answer signal corresponds to the authentication code previously registered in the main unit machine storage means is determined. If the determination result is affirmative, the authentication code from the portable machine 10 is determined valid, and predetermined control processing responsive to the trigger is executed. (The function will be described later in detail.)

As the control functions of the main unit machine 20, for example, the following function may be provided in addition to the control function executed after the authentication code is checked for validity by two-way communications based-on any of the triggers of the sensors as described above:

After a trigger as described above is once formed, the main unit machine 20 transmits a start signal periodically even if the trigger does not continuously occur. For example, a start notification signal described later is transmitted and received (or a request signal and an answer signal are transferred and received or the authentication code is checked for validity based on transferring and receiving the request signal and the answer signal). Whether or not the portable machine 10 exists within the communication-possible range is determined periodically based on whether or not the communication is established or the authentication code is determined valid. For example, when the portable machine 10 is determined to be outside the communication-possible range involved in all antennas, the monitor processing is terminated. This function will be hereinafter referred to as continuous portable machine search function. If the function is provided, preferably the monitor processing is executed for each antenna. Preferably, the communication-possible range (at least the transmission-possible range of a start signal) through the in-vehicle antenna 24, 25 is, for example, set to only the inside of the vehicle and the communication-possible range (at least the transmission-possible range of a start signal) through the out-of-vehicle antenna 22, 23 is set to a predetermined distance range from the vehicle 1.

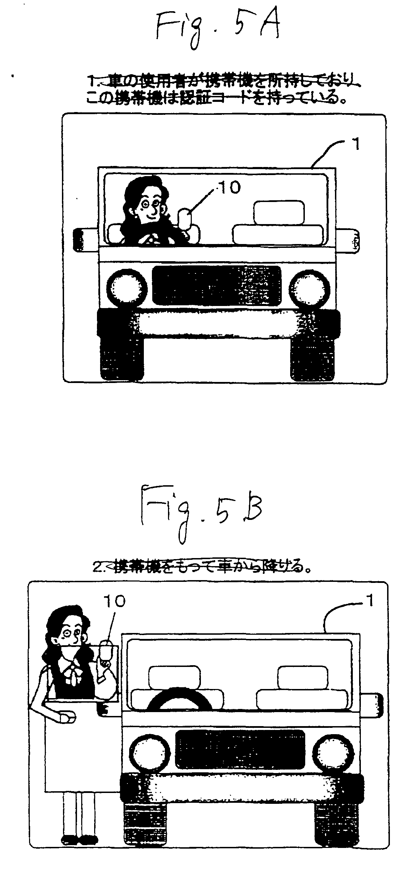

In the configuration, the continuous portable machine search function makes it possible to continuously determine (at least estimate) whether the portable machine (or the driver normally carrying the portable machine) exists in or out of the vehicle or exists at the right or left of the outside of the vehicle 1. Thus, for example, if the driver in the vehicle 1 as shown in FIG. 5A gets off the vehicle and closes a door as shown in FIG. 5B and leaves the vehicle 1 as shown in FIG. 5A and is away from the communication-possible range through the out-of-vehicle antennas 22 and 23 as shown in FIG. 5B, the operation sequence can be determined by the continuous portable machine search function and if the doors are unlocked, a control signal can be output to the door lock actuator 31 for automatically locking the doors.

As another control function of the main unit machine 20, the following function may be provided: For example, the fact that the engine of the vehicle 1 is stopped is sensed based on a notification signal from the control unit 32 of the engine control system, a steering lock actuation signal is transmitted to the steering lock 33 for automatically placing the steering wheel 42 in a steering lock state (that is, the steering wheel 42 is set to be unrotatable).

In this case, the main unit machine 20 also has the following function: When the switch of the portable machine 10, such as the locking switch 11 or the unlocking switch 12, is operated as previously mentioned in the description of the portable machine 10, upon reception of a radio signal transmitted from the portable machine 10, such as a locking command signal containing the authentication code, the authentication code is checked for validity, then a control signal for accomplishing the operation responsive to the command contained in the radio signal, such as the operation of locking the doors of the vehicle 1, is output. This function is the same as a general one-way communication keyless entry system.

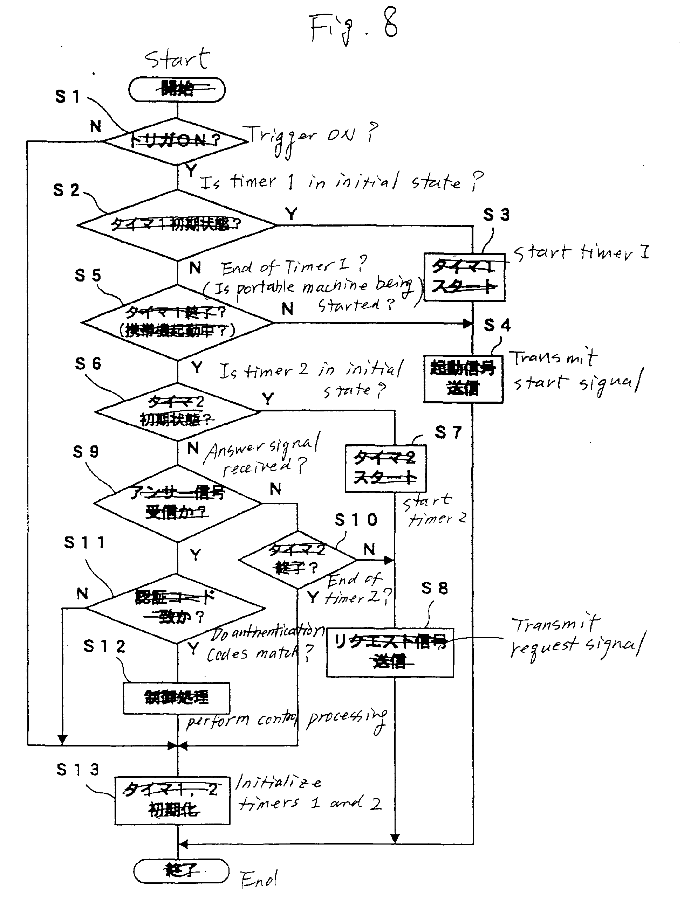

'Next, characteristic control processing of the control circuit of the control unit 21 in the main unit machine 20 will be discussed with reference to a flowchart of FIG. 8.

The control circuit (microcomputer) of the control unit 21 repeatedly executes the following processing sequence in a predetermined cycle in a start state with power supplied:

First, at step S1, whether or not any trigger holds is determined. If a trigger does not hold, control goes to step S13; if a trigger holds, control goes to step S2. The signal for holding the trigger may be not only a detection signal of the door knob sensor 26, 27 or the door lock knob switch 28, but also a detection signal of the proximity sensor 41 placed in the driver's seat of the vehicle 1.

Next, at step S2, whether or not a timer 1 is in an initial state is determined. If the timer 1 is in the initial state, control goes to step S3; if the timer 1 is not in the initial state, namely, is counting or is in a count-up state, control goes to step S5.

The timer 1 is provided for determining whether or not the time required for the portable machine 10 to start has elapsed after a start signal was transmitted, namely, whether or not it is estimated that the portable machine 10 is started. The time is set as a setup value and timer 1 is initialized at step S13 described later.

At step S3, the count operation of the timer 1 is started. Then, at step S4, a start signal is transmitted, namely, power transmission for starting the portable machine 10 is executed. When step S4 is passed through, one-cycle (one-sequence) processing is terminated.

On the other hand, at step S5, whether or not the count of the timer 1 reaches the setup value and the timer 1 enters a count-up state is determined. If the timer 1 is in the count-up state, control goes to step S6; otherwise, control goes to step S4. That is, whether or not it is estimated that the portable machine 10 is started by the start signal transmitted at step S4 is determined. If it is estimated that the portable machine 10 is started, control goes to step S6; otherwise, start signal transmission at step S4 is again executed or is continuously executed.

Next, at step S6, whether or not a timer 2 is in an initial state is determined. If the timer 2 is in the initial state, control goes to step S7; if the timer 2 is not in the initial state, namely, is counting or is in a count-up state, control goes to step S9.

The timer 2 is provided for determining whether or not the time required for the portable machine 10 to return an answer signal in response to a request signal has elapsed after the request signal was transmitted. The time is set as a setup value and timer 2 is initialized at step S13 described later.

At step S7, the count operation of the timer 2 is started. Then, at step S8, a request signal containing the authentication code stored in the main unit machine storage means is transmitted. When step S8 is passed through, one-cycle processing is terminated.

On the other hand, at step S9, whether or not the answer signal is received is determined. If the answer signal is received, control goes to step S11; if the answer signal is not received, control goes to step S10.

Next, at step S10, whether or not the count of the timer 2 reaches the setup value and the timer 2 enters a count-up state is determined. If the timer 2 is in the count-up state, control goes to step S13; otherwise, control goes to step S8.

At step S11, the authentication code contained in the received answer signal is compared with the authentication code stored in the main unit machine storage means and whether or not they match is determined. If they match, control goes to step S12; otherwise, control goes to step S13.

Next, at step S12, predetermined control processing is performed in response to the type of detection signal corresponding to the trigger determined to hold at step S1.

In this case, specifically, when the detection signal is a detection signal of the door knob sensor 26, 27 (or the door knob actuation sensor 29) or the door lock knob switch 28, control signal output for instructing the door lock actuator 31 to perform the unlock operation is executed. Consequently, the lock of the door (doors) of the vehicle 1, which may be left and right doors or may be only the door on the side provided with the sensor forming the trigger, is automatically released.

If the detection signal is a detection signal of the proximity sensor 41 placed in the driver's seat of the vehicle 1, an engine start enable signal is output to the control unit 32 of the engine control system or data setting operation (for example, setting an engine start enable flag) is performed and further a steering lock release command is output to the steering lock 33. If the engine start enable signal is output, the engine of the vehicle 1 is started as the engine start operation section 43 is operated. If the steering lock release command is output, the steering lock is released and the steering lock 33 is operated, enabling the driver to handle the steering wheel 42.

Last, at step S13, initialization processing of initializing the timers 1 and 2 is executed and then the one-cycle processing is terminated.

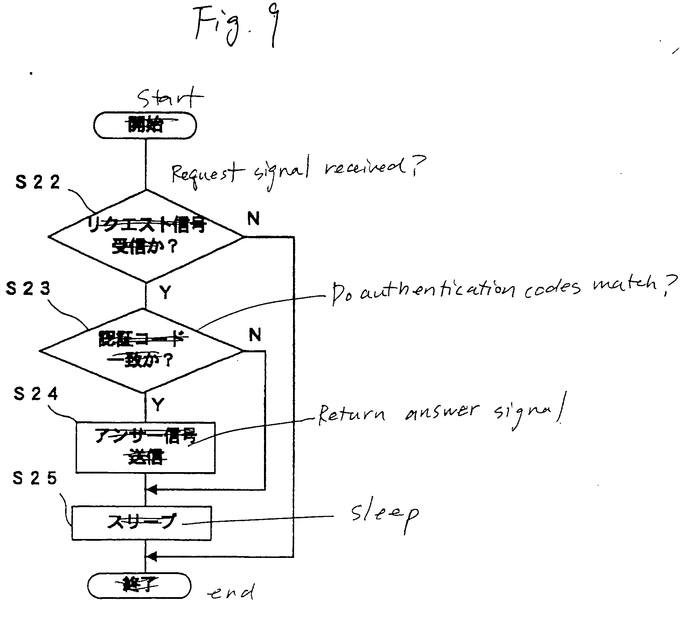

Next, characteristic control processing of the control circuit in the portable machine 10 will be discussed with reference to a flowchart of FIG. 9.

The control circuit (microcomputer) of the portable machine 10 repeatedly executes the following processing sequence in a predetermined cycle in a start state in which the portable machine 10 is started by power transmission (start signal) from the main unit machine 20:

First, at step S22, whether or not a request signal is received is determined. If a request signal is received, control goes to step S23; if a request signal is not received, the one-cycle processing is terminated.

At step S23, the authentication code contained in the received request signal is compared with the authentication code stored in the portable machine storage means and whether or not they match is determined. If they match, control goes to step S24; otherwise, control goes to step S25.

Next, at step S24, an answer signal containing the authentication code stored in the portable machine storage means is transmitted.

At step S25, the power supply control means is controlled for restoring the portable machine 10 to the above-described sleep mode. If the sleep mode is entered, the processing previously described with reference to FIG. 9 is not executed again. However, if the portable machine 10 is started by a start signal, the processing in FIG. 9 is repeated periodically as long as the portable machine 10 is being started.

According to the described control processing, electric power is transmitted as a start signal from the main unit machine 20 to the portable machine 10 with a detection signal of any of the sensors as a trigger, and a request signal containing the predetermined authentication code is output after the expiration of the time interval at which it is estimated that the portable machine 10 is started by the start signal (power transmission) (steps S1 to S8). At this time, if the user carrying the portable machine 10 exists actually in the communication-possible range, the portable machine 10 is started by the function of the power supply control means, receives the request signal, and checks the authentication code for validity (steps S22 and S23) before returning an answer signal containing the predetermined authentication code (step S24). Upon reception of the answer signal, the main unit machine 20 further checks the authentication code for validity and then executes the predetermined control processing (steps S9 and S12).

Thus, the control apparatus of the embodiment can operate as the following system less consuming power and providing advanced crime prevention and convenience (entry system and engine control system):

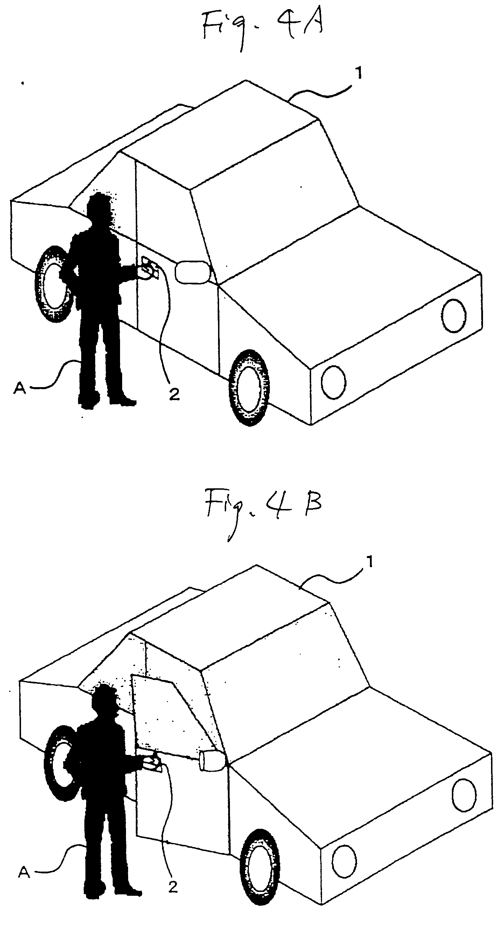

For example, as shown in FIG. 4A, when a driver A carrying a predetermined portable machine 10 touches or pulls the door knob 2 attempting to ride in the vehicle 1, the door knob sensor 26 or 27 or the door knob actuation sensor 29 outputs a detection signal as a trigger. Then, according to the above-described control processing, the portable machine 10 carried by the driver A is started from the sleep mode, checks the authentication code for validity, then executes predetermined control processing (control output for unlocking the door); if the doors of the vehicle 1 are locked, they are unlocked. Thus, although the unlocking operation is only performed provided that the authentication code is determined valid, even when the doors of the vehicle 1 are locked, if the driver A simply holds the door knob 2 and opens (pulls) the door as shown in FIG. 4B without performing any intentional operation for unlocking and authentication code checking, the driver A can ride in the vehicle 1 (namely, a smart entry is realized). The started portable machine 10 is restored to the sleep mode immediately just after the answer signal is transmitted, and power consumption of the portable machine 10 is reduced to the necessary minimum. At this time, other signals than the start signal (at least the request signal and the answer signal) are transmitted and received at communication frequency fitted to radio communications of normal signals, so that power consumption of the portable machine 10, etc., can be further decreased.

For example, if the driver A sitting in the driver's seat extends his or her arm to any of the operation tools 42 to 45 or near the operation tool attempting to start the engine of the vehicle 1 or drive the vehicle 1, the proximity switch 41 placed in the proximity of the operation tools detects the action, forming a trigger. According to the above-described control processing, the portable machine 10 carried by the driver A is again started and the authentication code is checked for validity, then predetermined control processing (control output for enabling engine start and releasing steering lock) is executed. Thus, although the described operation is only performed provided that the authentication code is determined valid, the driver A can operate the engine start operation section 43 for starting the engine and handle the steering wheel 42, etc., for running the vehicle 1 easily and promptly without performing any intentional operation for enabling engine start and releasing steering lock and authentication code checking performed at the time. The started portable machine 10 is also restored to the sleep mode immediately just after the answer signal is transmitted, and power consumption is always reduced to the necessary minimum (this also applies to the following).

For example, if the driver A sitting in the driver's seat extends his or her arm to a door lock knob (not shown) or near the door lock knob attempting to get off the vehicle 1 at the destination after running the vehicle with the doors locked, the door lock knob switch 28 placed in the proximity of the door lock knob detects the action, forming a trigger. According to the above-described control processing, the doors of the vehicle 1 are automatically unlocked.

In the embodiment, no authentication code is placed on the power transmission as the start signal initially transmitted from the main unit machine 20, so that crime prevention is enhanced as compared with the system in the related art described above. Particularly, in the embodiment, the start signal is only transmitted provided that a trigger as described above holds, and neither the start signal nor the request signal is transmitted unless such a trigger exists. Thus, theft of reading the signal transmitted from the vehicle 1 and reading the authentication code although the portable machine 10 is not available can be prevented with very high reliability.

Since any other signal than the start signal is transmitted and received at the normal communication frequency, it is made possible to increase the communication data amount while power consumption is maintained small, and one portable machine 10 can provide a wide variety of control functions, such as control of opening and closing a trunk, an engine room, or a refueling inlet, etc., in addition to locking the vehicle doors, automatic control of the engine control system, and theirmanual operation. Since the data amount of the authentication code can be increased, the data structure of the authentication code can be easily complicated and crime prevention is further enhanced also in this point.

### (Second embodiment)

Next, a second embodiment of the invention will be discussed. The embodiment is provided by changing a part of the control processing previously described with reference to FIG. 8 and FIG. 9 in the first embodiment.

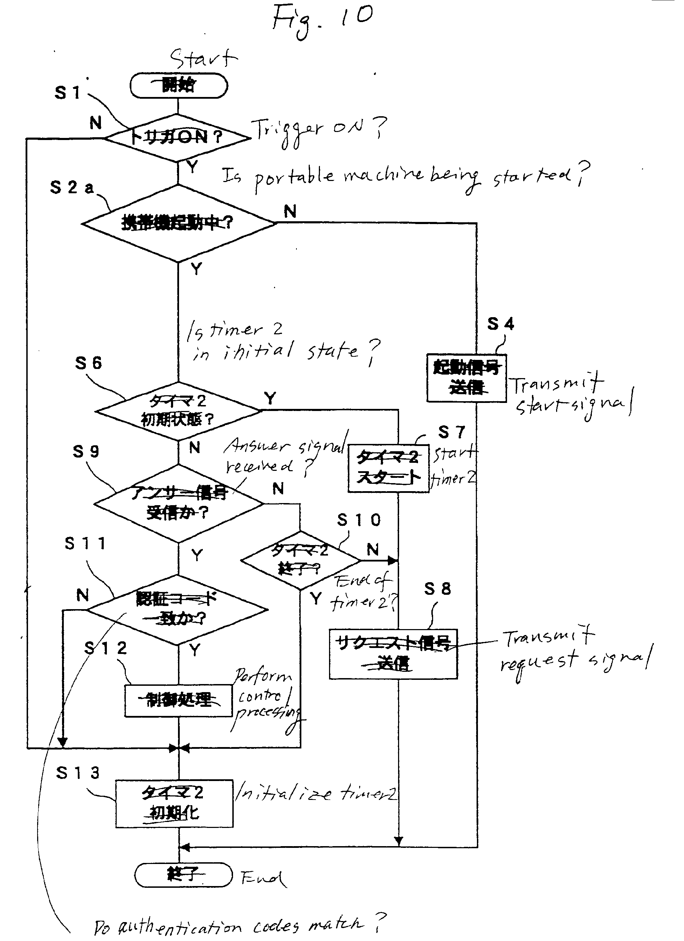

That is, in control processing of a control circuit of a main unit machine 20, steps S2, S3, and S5 in FIG. 8 are deleted and a new step S2a is provided in place of step 2, as shown in FIG. 10.

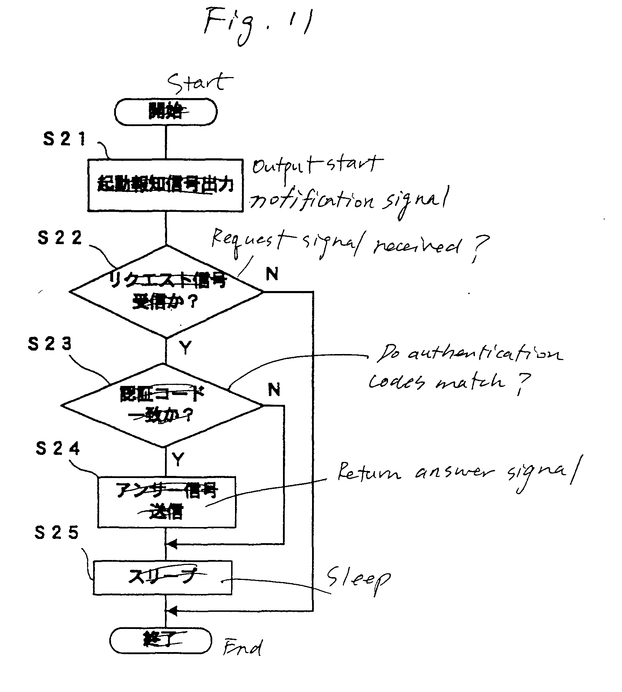

In control processing of a control circuit of a portable machine 10, a new step S21 is added preceding step S22 in FIG. 9, as shown in FIG. 11.

At the new step S21, a start notification signal for notifying that the portable machine 10 is started is radio-transmitted after the portable machine 10 is started. At the new step S2a in the processing of the main unit machine 20, whether or not the start notification signal is received is determined, namely, whether or not the portable machine 10 is started is determined.

In the control processing contents, the portable machine 10 is reliably checked for presence and starting based on the start notification signal transmitted when the portable machine 10 is started, then a request signal is transmitted at step S8.

Thus, crime prevention is further enhanced. In the control processing of the first embodiment, whenever the timer 1 enters a count-up state after the start signal is transmitted, the request signal is transmitted. Thus, for example, if an illegal person who can know the contents of a trigger illegally makes the trigger hold, it is feared that the start signal and the request signal may be transmitted in sequence from the vehiche (main unit machine 20) and the authentication code contained in the request signal may be read and decoded although the portable machine 10 is not available. However, in the configuration of the second embodiment, if a trigger is illegally turned on, a request signal is not transmitted unless a start notification signal is transmitted from the portable machine 10, and it is made impossible to steal the authentication code.

### (Other embodiments)

The invention is not limited to the above-described embodiment and various modifications are possible. For example, in the above-described embodiment, the specific examples are given mainly only for the door unlocking operation, but the invention can also be applied to the function of the door locking operation.

In this case, a door open/closed sensor for detecting a door being open or closed may be provided and the following condition may be set as the above-described trigger (step S1) :

For example, when a door being closed in an unlock state is sensed based on detection output of the door open/closed sensor and change is made from a state in which a detection signal is output from the door knob sensor or the door knob actuation sensor to a state in which the detection signal stops, it may be assumed that the trigger holds. In this case, for example, when the user closes the door while holding the door knob and moves his or her hand off the door knob, the above-described trigger holds and the authentication code is checked for validity as described above before the automatic locking operation is executed.

Alternatively, when handling a door from an open state to a closed state with a detection signal remaining output from the door knob sensor or the door knob actuation sensor in an unlock state is sensed based on detection output of the door open/closed sensor, it may be assumed that the trigger holds. In this case, for example, when the user closes the door while holding the door knob, the above-described trigger holds and the authentication code is checked for validity as described above before the automatic locking operation is executed.

To thus also apply the invention to the door locking operation for automatically locking doors, preferably exit detection means for detecting the portable machine or the passenger exiting from the vehicle is provided the door locking operation is executed only if the exit detection means checks that the portable machine or the passenger exits. In doing so, locking the portable machine or the passenger into the vehicle can be prevented.

For example, a portable machine search function of the main unit machine 20 or the above-described continuous portable machine search function can be used as the exit detection means. The portable machine search function mentioned here means that, for example, when any of the above-described triggers holds, the main unit machine 20 performs the following processing: For example, predetermined power as a start signal (or further a request signal) is sent through each antenna and whether or not the portable machine 10 exist anywhere in the communication-possible range through every antenna is determined based on whether or not the main unit communication circuit receives a start notification signal or an answer signal, namely, if the start notification signal is received, the portable machine 10 is determined to exist. At this time, whether or not the portable machine 10 exists in the vehicle is determined by determining which antenna the start notification signal is returned in response to the start signal sent through or which antenna the start notification signal is received through. That is, for example, if the start notification signal is received as a response to the start signal sent through the in-vehicle antenna 24 or 25, the portable machine 10 is determined to exist in the vehicle.

The exit detection means can also be provided by a processing function of estimating the presence or absence of a passenger in the vehicle based on output of the door open/closed sensor.

The invention is not limited to door locking or unlocking, engine starting, etc., and various controlled targets and the various control contents are possible.

The portable machine 10 may be provided with additional switches and various types of remote operation (manual operation) may be made possible in response to the additional switches. For example, switches for remotely operating opening and closing a trunk, an engine room, a refueling inlet, etc., a panic switch for sounding the vehicle' s horn when the passenger is assaulted by a thug, etc., and the like may be provided as required, needless to say.

To transmit and receive a signal at the normal communication frequency between the portable machine and the main unit machine, other signals than the above-described signals (request signal, answer signal, and start notification signal) may be transmitted and received.

The invention can be widely applied to any apparatus other than the vehicle entry system, etc., if the apparatus performs some control after checking the authentication code for validity by radio communications between a portable machine and a main unit machine.

According to the control apparatus of the invention, power transmission performed by the main unit machine to the portable machine is used only as the start signal of the portable machine (further power supply to the portable machine depending in some cases) and then the request signal and the answer signal for checking the authentication code for validity are transferred at the communication frequency different from the frequency of the power transmission.

Thus, even when the authentication code needs to be first transmitted from the main unit machine to the portable machine, if the authentication code is contained in the request signal for transmission, at least it need not be placed in the power consumption functioning as the start signal. Therefore, even if the power transmission is periodically executed all the time, theft of reading the authentication code from the power transmission becomes impossible and crime prevention is enhanced.

It is made possible to transmit and receive normal signals for checking the authentication code for validity, etc., at frequency fitted to the normal signals (communication frequency) by the signals containing the request signal and the answer signal and it becomes unnecessary to transmit and receive the normal signals at the power transmission frequency much consuming power, so that power consumption can be decreased accordingly. Particularly, to use the power transmission only as the start signal (if the power source of the portable machine after being started is provided by the battery installed in the portable machine), the power consumption decrease effect can be enhanced (particularly, power consumption of the main unit machine can be decreased exceptionally).

If it is made possible to transmit and receive the normal signals for checking the authentication code for validity, etc., at the normal communication frequency, the contents of the transferred signals can be increased for providing more various control and the authentication code can be easily complicated, whereby crime prevention is further enhanced.

## Claims

1. A control apparatus comprising:
a portable machine; and
a main unit machine, which is disposed on an object containing a controlled object, radio-communicating with said portable machine and then checking a validity that said portable machine is a predetermined portable machine before executing control processing for accomplishing a predetermined operation of the controlled object,
said main unit machine including:
a power sending section for sending a predetermined electric power at a first frequency by a power transmission in a non-contact manner using an electromagnetic wave,
a first communication section for radio-communicating signals at a second frequency different from the first frequency of the power transmission; and
a first storage section for storing a first authentication code,
said portable machine including:
a power receiving section for receiving the predetermined electric power by the power transmission,
a second communication section for radio-communicating the signals at the second frequency; and
a second storage section for storing a second authentication code,
wherein said portable machine is started from a sleep mode on the basis of a reception of the predetermined electric power by the power receiving section, said main unit machine transmits a request signal at the second frequency by the first communication section after sending the predetermined electric power, said portable machine receives the request signal transmitted from said main unit machine and transmits an answer signal, which contains the second authentication code previously stored in the second storage section, at the second frequency by the second communication section during the starting, and said main unit machine receives the answer signal in accordance with the transmitted request signal by the first communication section, wherein said main unit machine determines whether or not the second authentication code contained in the answer signal corresponds to the first authentication code previously stored in the first storage section and determines the validity of said portable machine if the determination result is affirmative.

2. The control apparatus as claimed in claim 1, wherein the request signal is transmitted on the basis of a determination by said main unit machine that said portable machine is started after the power sending section sends the predetermined electric power.

3. The control apparatus as claimed in claim 2, wherein said portable machine transmits a start notification signal for notifying that said portable machine is started by the second communication section after said portable machine is started, and saidmain unit machine determines that said portable machine is started on the basis of a reception of the start notification signal by the first communication section.

4. The control apparatus as claimed in any of claims 1-3, further comprising:
a detection section for detecting one of a relative movement of said portable machine or a user of said portable machine to said main unit machine or the object and an action of a user of said portable machine or the object in relation to a predetermined operation of the controlled object,
wherein said main unit machine sends the predetermined electric power based on a detection result of the detection section.

5. The control apparatus as claimed in any of claims 1-4, wherein the object is a vehicle, the controlled object is a lock device for locking or unlocking a door of the vehicle, and the control processing is a control signal output for accomplishing the locking or unlocking operation of the lock device.

6. The control apparatus as claimed in claim 4, wherein the object is a vehicle, the controlled object is a lock device for locking or unlocking a door of the vehicle, and the detection section contains a door knob sensor for detecting a body of the user being in contact with a door knob of the vehicle or the body of the user approaching the door knob of the vehicle to handle the door knob.

7. The control apparatus as claimed in claim 6, wherein
in a lock state of the door, said main unit machine sends the predetermined electric power if the door knob sensor outputs the detection signal, and said main unit machine executes a control signal output for accomplishing the unlocking operation of the lock device if the validity of said portable machine is determined.

8. The control apparatus as claimed in claim 6, wherein the detection section contains a door open/close sensor for detecting an open or close state of the door of the vehicle.

9. The control apparatus as claimed in claim 8, wherein in an unlock state of the door, said main unit machine sends the predetermined electric power if the door open/close sensor detects that the door is closed and change is made from a state that the detection signal is output from the door knob sensor to a state that the detection signal stops, and said main unit machine executes a control signal output for accomplishing the locking operation of the lock device if the validity of said portable machine is determined.

10. The control apparatus as claimed in claim 8, wherein in an unlock state of the door, said main unit machine sends the predetermined electric power if the door open/close sensor detects that the door is handled from the open state to the close state while the detection signal is output from the door knob sensor, and saidmain unit machine executes a control signal output for accomplishing the locking operation of the lock device if the validity of said portable machine is determined.

11. The control apparatus as claimed in any of claims 8-10, wherein the door knob sensor includes a door knob actuation sensor for detecting actuation of the door knob of the vehicle.

12. The control apparatus as claimed in any of claims 8-11, further comprising:
exit detection section for detecting said portable machine or a passenger exiting from the vehicle,
whereim said main unit machine executes the control signal output for accomplishing the locking operation of the lock device only if the exit detection means detects that said portable machine or the passenger exits from the vehicle.

13. The control apparatus as claimed in any of claims 1-4, wherein the object is a vehicle, the controlled object is an object installed in the vehicle, and the control processing is one of signal output or data setting operation for enabling the operation of the vehicle-installed object and signal output for giving an instruction to operate the vehicle-installed object.

14. The control apparatus as claimed in claim 4, wherein the object is a vehicle, and the controlled object is an object installed in the vehicle, wherein said main unit machine sends the predetermined electric power if the detection section outputs the detection signal, and saidmain unit machine executes one of signal output or data setting operation for enabling the operation of the vehicle-installed object and signal output for giving an instruction to operate the vehicle-installed object if the validity of said portable machine is determined.

15. The control apparatus as claimed in claim 14, wherein the detection section contains a drive operation sensor for detecting a body of the user being in contact with a drive operation section of the vehicle or the body of the user approaching the drive operation section of the vehicle to drive the vehicle.

16. The control apparatus as claimed in claim 14, wherein the detection section contains an operation sensor for detecting a body of the user being in contact with an operation section of vehicle-installed object or the body of the user approaching the operation section of the vehicle-installed object to operate the vehicle-installed object.

17. A control method of a control apparatus having a portable machine and a main unit machine disposed on an object containing a controlled object, said method comprising:
transmitting a predetermined electric power by a power transmission at a first frequency from the main unit machine to the portable machine to start the portable machine from a sleep mode;
transmitting a request signal from the main unit machine to the portable machine in accordance with the starting of the portable machine by a radio-communication at a second frequency different form the first frequency of the power transmission;
transmitting an answer signal including an authentication code from the portable machine to the main unit machine by the radio-communication at the second frequency on the basis of a reception of the request signal;
checking a validity that said portable machine is a predetermined portable machine on the basis of the authentication code included in the answer signal in the main unit machine;
executing control processing for accomplishing a predetermined operation of the controlled object in main unit machine if the validity of the portable machine is determined.
